# EUROPÄISCHE PATENTSCHRIFT

(11) **EP 1 659 077 B1**
(45) Veröffentlichungstag und Bekanntmachung des Hinweises auf die Patenterteilung: **23.06.2010**
(21) Anmeldenummer: 05111132.6
(22) Anmeldetag: 23.11.2005
(51) Int. Cl.: B65G 1/04, B65G 57/03, B65B 53/00

(54) **Regallager mit Kommissionierfächern für die automatisierte Kommissionierung von Waren**
Storage facility comprising shelves for the automatic selection of goods
Magasin comportant des compartiments de rayonnage pour la selection automatique de marchandises

(30) Priorität: 23.11.2004 DE 102004056474
(43) Veröffentlichungstag der Anmeldung: 24.05.2006
(73) Patentinhaber: WITRON Logistik + Informatik GmbH, 92711 Parkstein (DE)
(72) Erfinder:
(74) Vertreter: Betten & Resch

(56) Entgegenhaltungen:
- EP-A- 0 559 604
- EP-A- 1 234 785
- EP-A- 1 386 864
- EP-A- 1 462 393
- DE-U1- 9 310 690
- US-A- 3 880 299

## Beschreibung

### Gebiet der Erfindung

Die Erfindung betrifft ein Regallager und ein Verfahren zur Lagerung und zum Kommissionieren von Waren, insbesondere von Waren auf Ladungsträgern wie Paletten, gemäß dem Oberbegriff des Patentanspruchs 1 bzw. 12. Solche Regallager weisen eine Vielzahl von Lagerregalen mit dazwischen angeordneten Regalgassen auf, in denen Regalfahrzeuge zum Be- und Entladen der Waren in bzw. aus den Lagerregalen verfahrbar sind.

### Hintergrund der Erfindung

Ein derartiges Regallager erfüllt einerseits die Aufgabe der Lagerung angelieferter Waren beispielsweise der Lieferanten einer Supermarktkette und außerdem die Aufgabe der Kommissionierung der Waren entsprechend den Lieferaufträgen, beispielsweise an die einzelnen Filialen der Supermarktkette. Bei den zu lagernden Waren kann es sich beispielsweise um auf Ladungsträgern (Paletten) gelieferte Mehrfachgebinde handeln.

Die Aufgaben Lagerung einerseits und Kommissionierung andererseits werden bei bekannten Regallagern in der Regel mit getrennten Mitteln und an getrennten Orten durchgeführt.

Die Ein- und Auslagerung der Waren in die Regalplätze des Regallagers erfolgt gewöhnlich mittels bedienergesteuerten oder automatisierten Regalfahrzeugen bzw. Regalbediengeräten. Die ausgelagerten Waren werden - gegebenenfalls nach einer Zwischenpufferung - an separaten Kommissionierplätzen durch Kommissionierpersonal manuell kommissioniert, d.h. entsprechend einem Auftrag auf einer Auftragspalette, einem Auftragsbehälter oder dergleichen einzeln zusammengestellt. Für schwerere Waren werden hierfür Hilfsmittel wie beispielsweise Gabelstapler eingesetzt. Die Leistungsfähigkeit derartiger Regallager wird auch durch die Leistungsfähigkeit des Kommissioniervorgangs bestimmt, weicher außerdem sehr personal- und kostenintensiv ist.

Die EP 559604 A1 beschreibt eine Lager- und Kommissionieranlage aufweisend ein mittels eines Regalfahrzeuges bedientes Hauptlager sowie ein mit wenigstens einer Kommissionierzelle versehenes Kommissionierlager, welche Kommissionierzelle einen Kommissionierroboter zur Kommissionierung von Kommissionierpaletten aufweist.

Es besteht daher das Bedürfnis nach einem Regallager mit erhöhtem Automatisierungsgrad und größerer Kosteneffizienz.

### Zusammenfassung der Erfindung

Der vorliegenden Erfindung liegt die Aufgabe zugrunde, ein Regallager und ein Verfahren zur automatisierten Lagerung und Kommissionierung von Waren vorzuschlagen, welche eine verbesserte Ausnutzung der vorhandenen Leistung der Regalbediengeräte, eine erhöhte Kosteneffizienz und eine Verringerung der Fehlerquote bei der Kommissionierung erlauben.

Eine weitere Aufgabe der Erfindung liegt darin, durch Verdichtung der Auftragspaletten die Lagerdichte und damit die Raumeffizienz der Auftragspaletten im Auslieferungs-LKW zu erhöhen.

Gelöst wird die Aufgabe durch ein Regallager gemäß Anspruch 1.

Der Kommissioniervorgang findet somit nicht an einem separaten Kommissionierplatz, sondern im Lagerregal selbst mittels des bereits vorhandenen - vorzugsweise automatisierten - Regalfahrzeugs statt. Dadurch kann Lagerfläche für die Kommissionierplätze und Kommissionierpersonal eingespart werden. Weiterhin kann die Leistung der Regalfahrzeuge effizienter genutzt werden, da diese nicht nur für den Einlager- und Auslagervorgang, sondern auch für den Kommissioniervorgang genutzt werden.

Bei den in den Kommissionierfächern in den Lagerregalen kommissionierten Auftragswarenstapeln kann es sich um Warenstapel und Mehrfachbeginde auf Ladungsträgern unterschiedlicher Grundflächen, insbesondere Europaletten, halbe Paletten (Düsseldorfer Paletten) oder 1/4-Paletten handeln, die in einem Auftragswarenstapel auch gemischt verwendet werden können.

Zwei Auftragswarenstapel können auch verdichtet werden, um Lagerfläche im Auslieferungs-LKW einzusparen.

Vorzugsweise wird der Auftragswarenstapel auf einer Auftragspalette versandfertig kommissioniert. Dabei ist vorzugsweise eine Rechnereinrichtung vorgesehen, um raumoptimierte Auftragswarenstapel zu bilden.

Die an den Kommissionierfächern vorgesehenen Ladehilfen umschließen diese dreiseitig, um ein Herunterfallen von Waren aus dem zu kommissionierenden Warenstapel zu verhindern.

Die Kommissionierfächer sind vorzugsweise an wechselnden Positionen in den Lagerregalen einrichtbar. Der Boden der Ladehilfe selbst kann dabei palettenförmig ausgebildet sein, so dass die Ladehilfe auch mittels Regalfahrzeug transportierbar ist.

Zur Kommissionierung von 1/4-Paletten weisen die Regalfahrzeuge vorzugsweise einzeln verfahrbare Gabeln auf.

Das Regallager weist vorzugsweise ferner Pufferplätze in der Nähe des Lagerausgangs zum Puffern versandfertiger Auftragswarenstapel sowie am Ausgang eine Folienwickelstation zum Umwickeln versandfertiger Auftragswarenstapel mit stabilisierender Folie mit einer Trennstation zum Trennen der Auftragswarenstapel von der Ladehilfe auf.

Die Aufgabe wird ferner gelöst durch ein Verfahren zur Lagerung und Kommissionierung von Waren auf Ladungsträgern in einem Regallager, aufweisend die Schritte der Einlagerung der Waren mittels eines Regalfahrzeugs auf einer Vielzahl von Lagerplätzen eines Lagerregals, der automatisierten Kommissionierung von Auftragswarenstapeln in dafür vorgesehenen Kommissionierfächern mittels eines Regalfahrzeugs gemäß einem vorher erfassten Versandauftrag, und der Auslagerung der kommissionierten Auftragswarenstapel mittels des Regalfahrzeugs und Auslieferung der versandfertigen Auftragswarenstapel.

### Kurze Beschreibung der Zeichnungen

Die Erfindung wird im Folgenden anhand eines bevorzugten Ausführungsbeispiels unter Bezugnahme auf die beiliegenden Zeichnungen beschrieben.
- Fig. 1: zeigt eine schematische Horizontalschnittansicht eines Ausführungsbeispiels des erfindungsgemäßen Regallagers.
- Fig. 2: zeigt eine Querschnittsansicht des Regallagers von Fig. 1.
- Fig.3: zeigt schematisch ein Warenflussdiagramm des erfindungsgemäßen Verfahrens.
- Fig. 4: zeigt aufeinanderfolgende Verfahrensschritte der Kommissionierung eines Auftragswarenstapels in einem Kommissionierfach gemäß einem Ausführungsbeispiel der Erfindung.
- Fig. 5: zeigt aufeinanderfolgende Arbeitsschritte der Kommissionierung eines Auftragswarenstapels ohne Verwendung einer Ladehilfe.
- Fig. 6: zeigt die Arbeitsschritte der Verdichtung zweier Auftragswarenstapel zur Verringerung des Flächenbedarfs im Ausliefer-LKW.
- Fig. 7: zeigt schematisch eine Ladehilfe zur Verwendung mit der vorliegenden Erfindung.
- Fig. 8: zeigt schematisch eine Folienwickelstation zur Verwendung mit der Erfindung.
- Fig. 9: zeigt schematisch den Aufbau einer Rechnereinrichtung zur Berechnung einer optimierten Konfiguration eines Auftragswarenstapels.

### Detaillierte Beschreibung der Erfindung

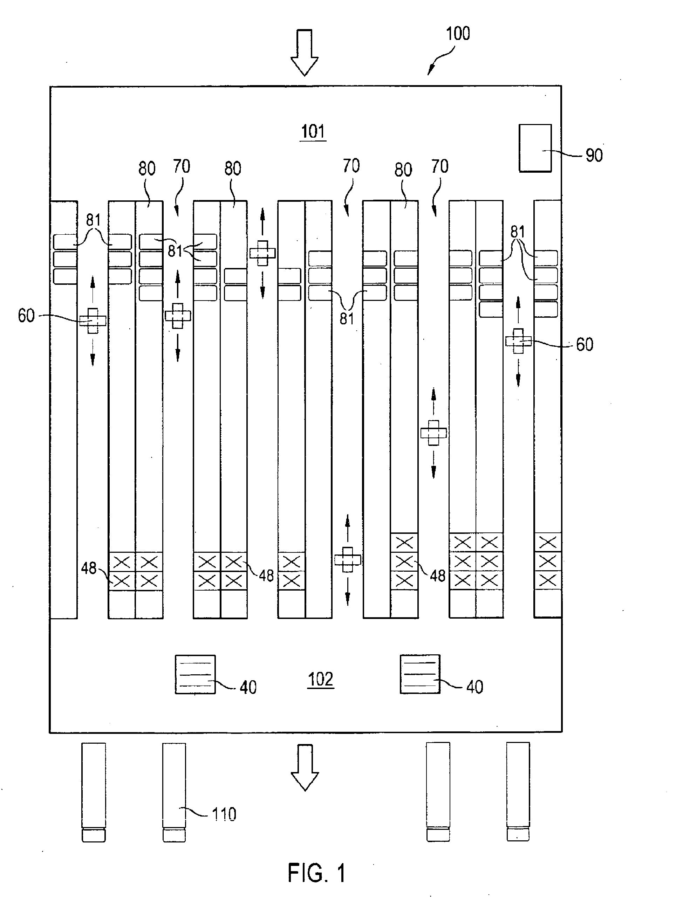

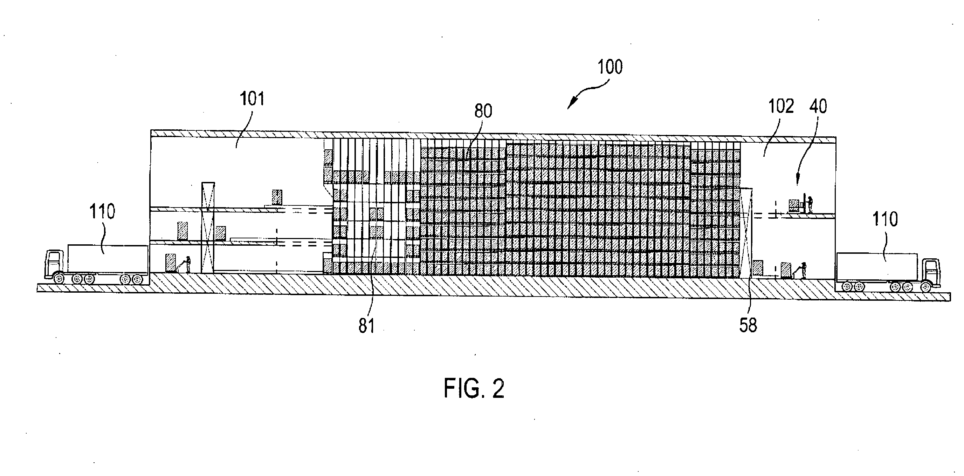

Fig. 1 zeigt eine schematische Horizontalschnittansicht eines Ausführungsbeispiels des erfindungsgemäßen Regallagers und Fig. 2 eine Querschnittsansicht desselben Lagers.

Das Regallager 100 gliedert sich in eine Vorzone oder Anlieferungsbereich 101, einen Lagerbereich mit einer Vielzahl von Lagerregalen 80 sowie einen Auslagerbereich 102.Zwischen den einzelnen Lagerregalen 80 im Lagerbereich sind parallele Lagergassen 70 ausgebildet, in denen an sich bekannte Regalfahrzeuge 60, vorzugsweise vollautomatisch betreibbare Regalfahrzeuge, verfahrbar sind. Die Regalfahrzeuge nehmen im Vorzonenbereich 101 angelieferte Ware auf und lagern diese in die Lagerplätze in den Lagerregalen 80 ein. Genauso dienen die Regalfahrzeuge 60 dazu, auszulagernde Waren dem Lagerregal zu entnehmen und auszulagern. Aus im Folgenden noch näher erläuterten Gründen weisen die Regalfahrzeuge vorzugsweise zwei separat voneinander verfahrbare Gabeln oder Zinken auf.

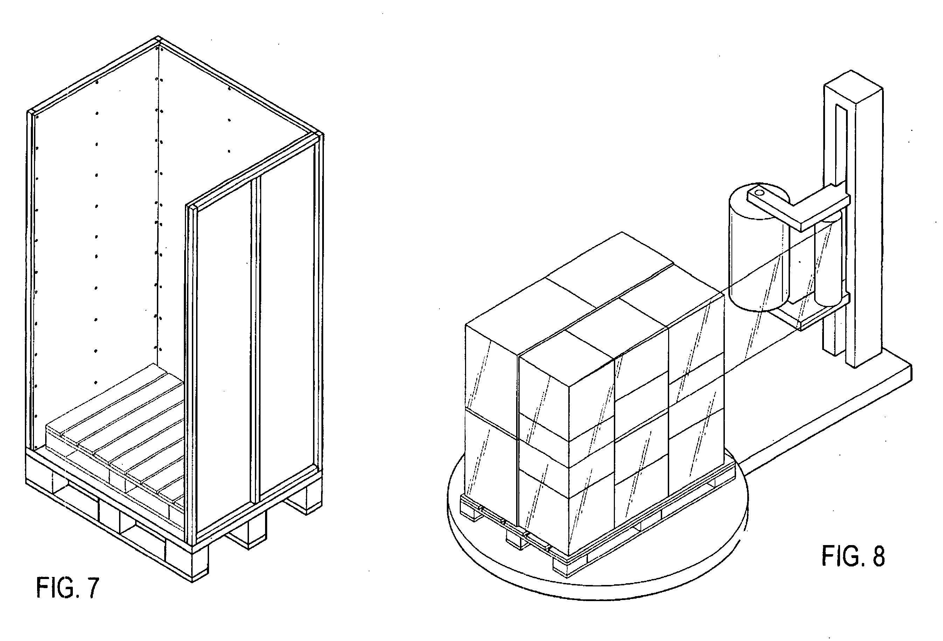

Im Auslagerbereich des Regallagers befinden sich Folienwickelstationen 40 zum Umwickeln eines fertig kommissionierten Auftragswarenstapels mittels einer stabilisierenden Folie oder dergleichen. Eine solche Folienwickelmaschine ist schematisch in Fig. 8 dargestellt. Die versandfertigen und mit Folie umwickelten Auftragswarenstapel werden dann wartenden Lkw 110 zugeführt.

Das in den Fig. 1 und 2 dargestellte Regallager weist erfindungsgemäß mehrere, vorzugsweise flexibel an verschiedenen Regalpositionen einrichtbare Kommissionierfächer 81 auf zur automatisierten Kommissionierung von Auftragswarenstapeln mittels des in der jeweiligen Regalgasse 70 verfahrbaren Regalfahrzeuges 60. Die Kommissionierfächer 81 sind vorzugsweise mit einer Ladehilfe 82 versehen (s. Fig. 7), die das Kommissionierfach dreiseitig umschließt, um ein Herunterfallen von Waren zu verhindern. Durch die Kommissionierfächer 81 können Auftragswarenstapel schon in den Lagerregalen und mittels der Regalfahrzeuge 60 entsprechend einem Versandauftrag kommissioniert, d.h. zusammengestellt werden. Ein fertig kommissionierter Warenstapel braucht dann nur noch - wiederum mit dem Regalfahrzeug - direkt ausgelagert, mit Folie umwickelt und in den Lkw geladen werden. Separate Kommissionierplätze zur manuellen Kommissionierung der Ware können somit entfallen.

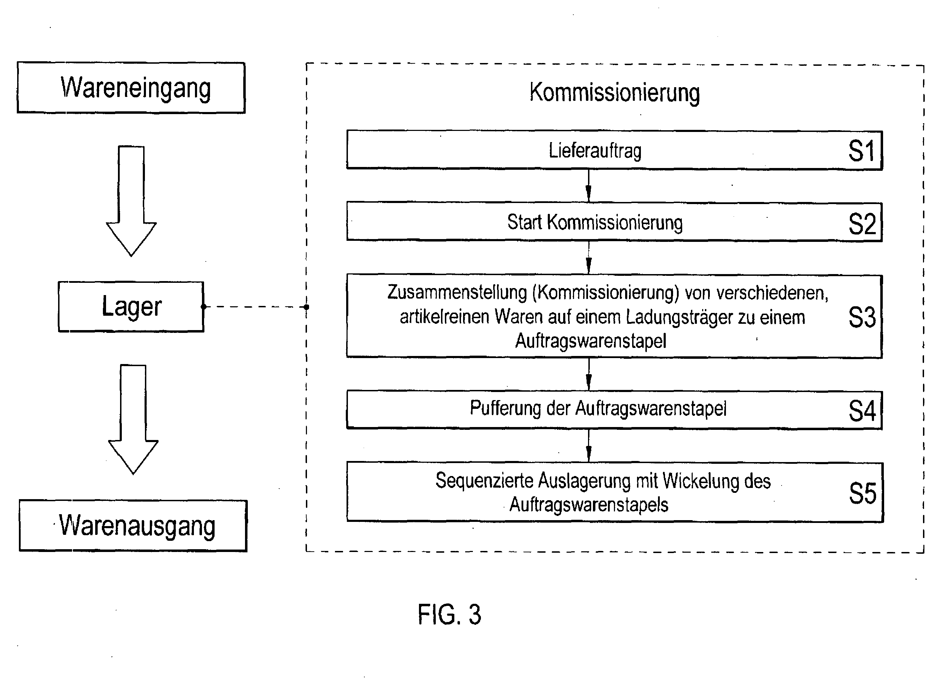

Ein Materialflussdiagramm zur Erläuterung des erfindungsgemäßen Lager- und-Kommissionierverfahrens ist in Fig. 3 gezeigt. Die am Wareneingang angelieferte Ware wird wie oben beschrieben mittels Regalfahrzeugen in den Lagerfächern der Lagerregale eingelagert. Sobald ein Lieferauftrag eingeht (Schritt S1), werden durch die Rechnereinrichtung 90 die entsprechenden Auftragswarenstapel konfiguriert und in Schritt S2 der Kommissioniervorgang gestartet. Im Verfahrensschritt S3 werden die verschiedenen Warengebinde des Lieferauftrags durch das Regalfahrzeug im Kommissionierfach auf einem Ladungsträger zu einem Auftragswarenstapel zusammengestellt (kommissioniert). Fertig zusammengestellte Auftragswarenstapel werden gegebenenfalls zwischengepuffert (Schritt S4) und dann sequenziert (reihenfolgerichtig) zum Warenausgang ausgelagert. Dort wird in Schritt S5 der Auftragswarenstapel von der Ladehilfe getrennt und gleichzeitig an der Folienwikkelstation mit einer Haltefolie umwickelt.

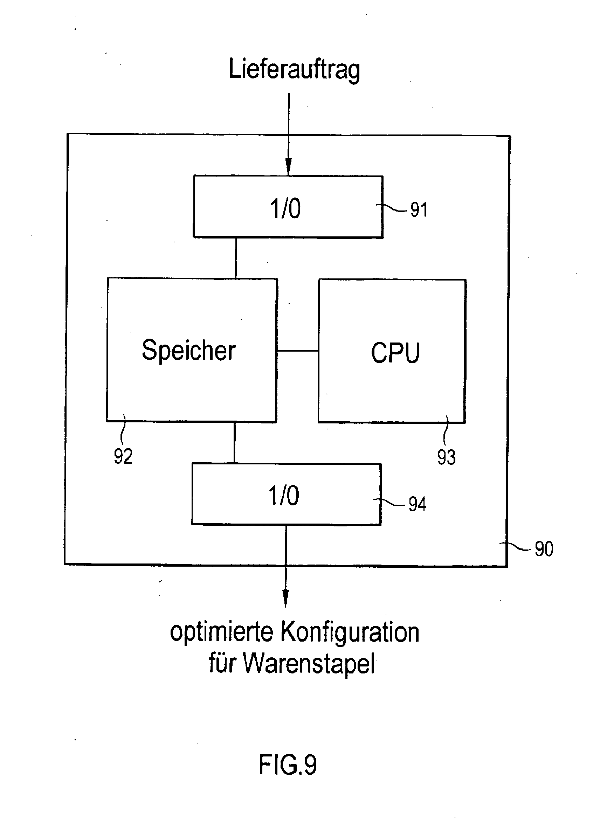

Vorzugsweise wird die Konfiguration eines Auftragswarenstapels bezüglich Raumausnutzung, Stabilität und/oder Entnahmereihenfolge mittels einer Rechnereinrichtung 90 optimiert. Die Rechnereinrichtung 90 ist schematisch in Fig. 9 dargestellt. Die Dateneines Lieferauftrags werden einer Eingabe/Ausgabeeinheit 91 zugeführt und in einem Speicher 92 abgespeichert. Die Zentralrecheneinheit (CPU) 93 berechnet daraus anhand vorgegebener Randbedingungen wie der Palettengröße, maximaler Höhen und Maße von Warenstapeln etc. die optimale Beladungskonfiguration des oder der Auftragswarenstapel zur Erfüllung des Lieferauftrags. Die automatisierten Regalbediengeräte können dann in den dafür vorgesehenen Kommissionierfächern 81 die Auftragswarenstapel entsprechend der vorher berechneten und optimierten Konfiguration im Regallager selbst zusammenstellen.

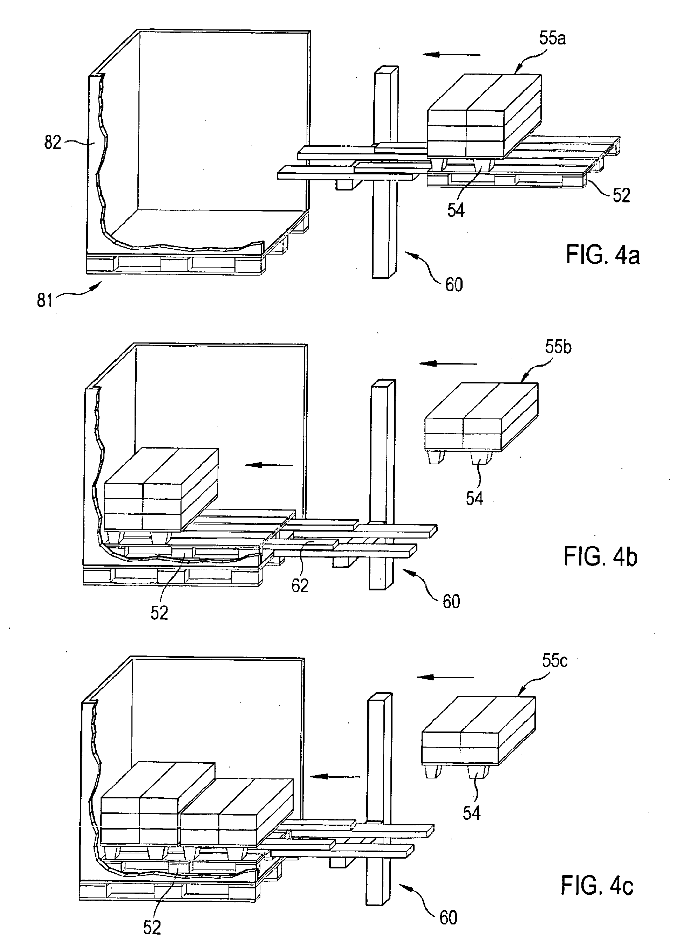

Die Verfahrensschritte eines Ausführungsbeispiels des erfindungsgemäßen Kommissioniervorgangs sind im Detail schematisch in den Fig. 4a) bis 4e) dargestellt.

In einem ersten, in Fig. 4a) gezeigten Verfahrensschritt wird eine Palette 52, die später den Auftrags- oder Versandladungsträger bildet, mit einem darauf befindlichen ersten Warenstapel 55a in dem mit einer Ladehilfe 82 versehen Kommissionierfach 81 mit Hilfe des Regalfahrzeuges 60 eingelagert. Der Warenstapel 55a befindet sich dabei auf einer 1/2-Palette oder sogenannten Düsseldorfer Palette, deren Grundfläche der Hälfte der Europalette 52 entspricht.

Im nächsten Verfahrensschritt (Fig. 4b) und 4c)) wird ein weiterer, sich auf einer 1/2-Palette 54 befindlicher Warenstapel 55b mit Hilfe des Regalfahrzeugs auf die Auftragspalette 52 geladen. Bei der Berechnung der Beladungskonfiguration durch die Rechnereinrichtung 90 wird dabei darauf geachtet, dass der jeweils höhere Warenstapel in der untersten Ebene immer "hinter" einem niedrigeren Warenstapel zu liegen kommt.

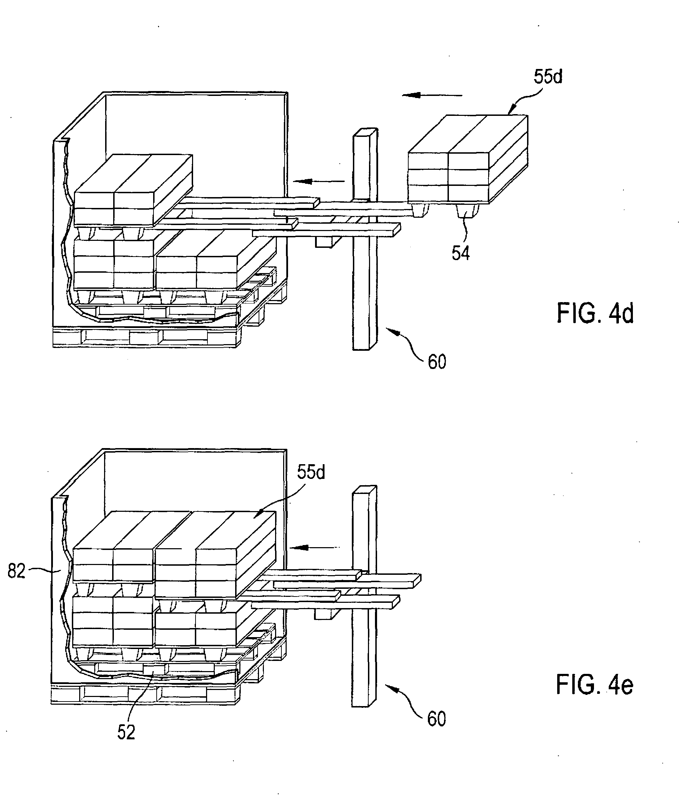

Wie in den Fig. 4d) und 4e) gezeigt, werden weitere Warenstapel 55c und 55d auf den bereits vorhandenen Warenstapel aufgeladen, bis die vorherberechnete Höhe des Warenstapels erreicht ist. Der Auftragswarenstapel ist dann fertig zur Auslagerung in den Auslagerbereich bzw. Versandbereich des Regallagers.

Bei dem in Fig. 4 gezeigten Ausführungsbeispiel werden vier 1/2-Paletten zu einem Auftragswarenstapel zusammengestellt. Die Erfindung erlaubt jedoch ausdrücklich, Auftragswarenstapel aus einzelnen Warenstapeln verschiedener Abmessungen, beispielsweise ganze Europaletten, 1/2-Paletten oder 1/4-Paletten zu bilden. Auch gemischte Warenstapel sind möglich, beispielsweise vier 1/4-Paletten auf zwei 1/2-Paletten oder einer Europalette. Zur Beförderung der 1/4-Paletten sind die Regalfahrzeuge 60 vorzugsweise mit einzeln verfahrbaren Gabeln ausgerüstet, wobei eine 1/4-Palette von einer einzelnen Gabel gehandhabt wird.

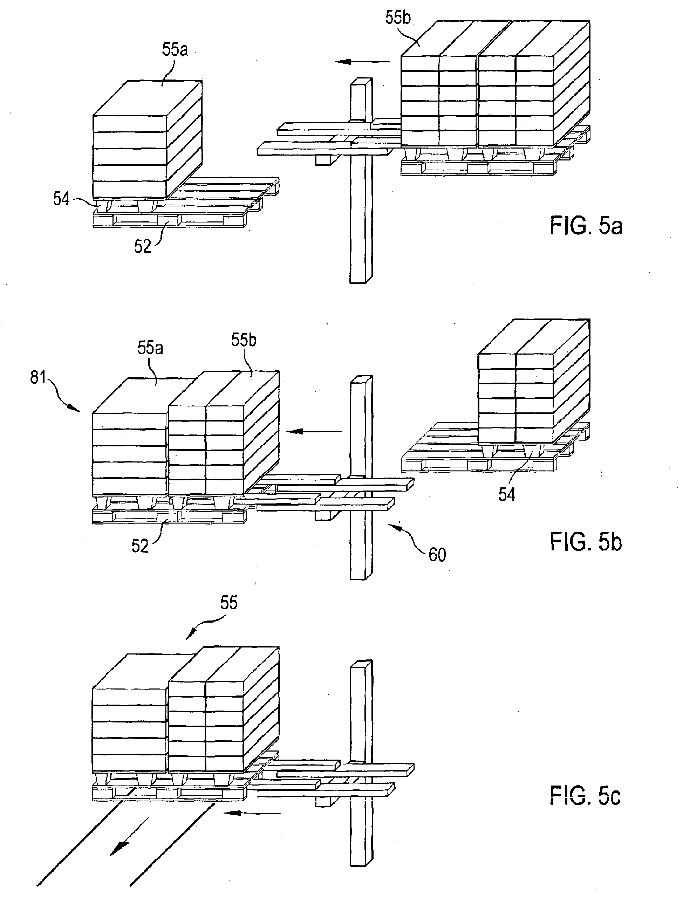

Ein weiteres Ausführungsbeispiel eines erfindungsgemäßen Kommissioniervorgangs ist in den Fig. 5a) bis 5c) gezeigt, wobei in diesem Fall das Kommissionierfach 81 nicht mit einer Ladehilfe ausgerüstet ist. Um ein Herunterfallen von Waren zu verhindern, ist die Ladehilfe jedoch bevorzugt.

In dem in Fig. 5a) gezeigten ersten Arbeitsschritt wird von einer in der rechtsseitigen Regalgasse befindlichen Palette ein erster, auf einer 1/2-Palette befindlicher Warenstapel 55b mit dem Regalfahrzeug 60 entnommen und, wie in Fig. 5b) gezeigt ist, neben den schon auf der Auftragspalette 52 befindlichen Warenstapel 55a gestellt. Der so fertig kommissionierte Auftragswarenstapel 55 wird, wie in Fig. 5c) durch Pfeile angedeutet, mit den Gabeln des Regalbediengeräts 60 dem Regallager entnommen und zur Auslagerzone ausgelagert. Gegebenenfalls kann hier der Auftragswarenstapel 55 noch auf einem der Pufferplätze 48 (s. Fig. 1) zwischengepuffert werden, welche vorzugsweise in der Nähe des Auslagerbereichs 102 vorgesehen sind.

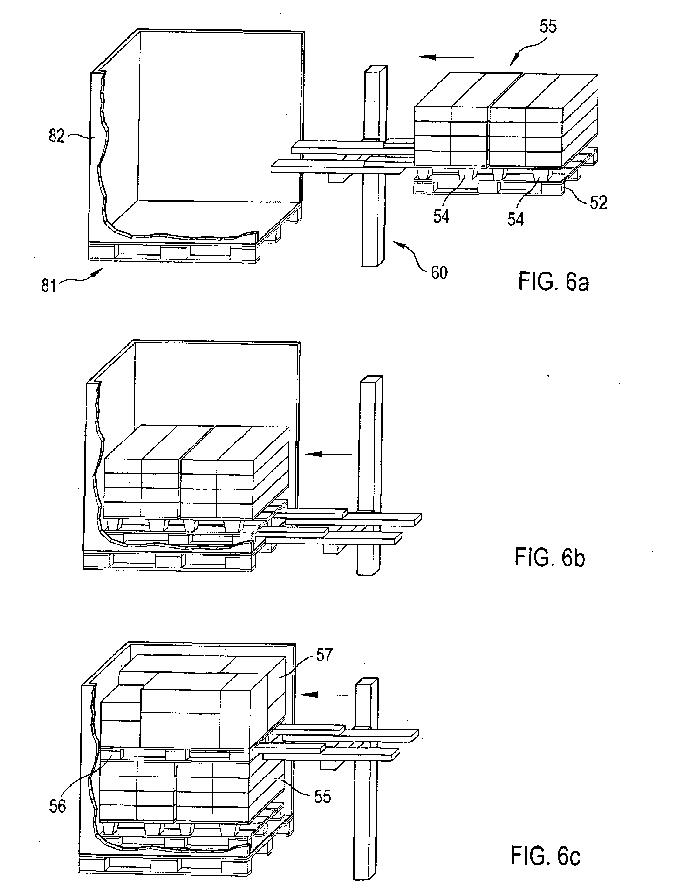

Das Verdichten zweier fertig kommissionierter Auftragswarenstapel 55, 57 in einem Kommissionierfach 81 ist schematisch in Fig. 6 gezeigt.

Ein erster Auftragswarenstapel 55 bestehend aus zwei 1/2-Paletten 54 wird vom Regalfahrzeug 60 auf den mit Ladehilfe 82 versehenen Kommissionierplatz 81 befördert, wie in den Fig. 6a) und 6b) gezeigt ist. Anschließend wird von einem anderen Kommissionierplatz ein auf einer Palette 56 befindlicher kommissionierter Auftragswarenstapel 57 auf dem ersten Warenstapel 55 abgelegt, so dass der Laderaum später im Versand-LKW optimal ausgenutzt wird und somit eine Verdichtung stattfindet. Beide Warenstapel 55, 57 können dann in einem Arbeitsgang mittels des Regalfahrzeugs 60 ausgelagert oder auf einem Pufferplatz zwischengepuffert werden.

Mit der Erfindung ist es so möglich, die Kommissionierung automatisiert raum- und personaleffizienter auszuführen, die Kapazität der Regalfahrzeuge besser auszulasten (Regalfahrzeuge, die gerade durch Ein- und Auslagerung wenig beansprucht werden, können zur Kommissionierung herangezogen werden) und somit die Lagerleistung insgesamt zu erhöhen. Weiterhin kann durch optimierte Verdichtung der Warenstapel der vorhandene Raum in den Ausliefer-LKW besser ausgenutzt werden.

## Patentansprüche

1. Regallager mit einer Vielzahl von Lagerregalen (80) und dazwischen angeordneten Lagergassen (70), in denen Regalfahrzeuge (60) zur Be- und Entladung der Lagerregale (80) verfahrbar sind, **dadurch gekennzeichnet, dass** in wenigstens einem der Lagerregale (80) Kommissionierplätze (81) mit den Kommissionierplatz jeweils dreiseitig umschließenden Ladehilfen (82) vorgesehen sind zur Kommissionierung von Auftragswarenstapeln (55) mittels einem der Regalfahrzeuge (60) gemäß einem vorher erfassten Versandauftrag.

2. Regallager nach Anspruch 1, wobei die Auftragswarenstapel Warenstapel auf Ladungsträgern (52, 54, 56) unterschiedlicher Grundflächenmaße, insbesondere Europaletten, halbe Paletten (Düsseldorfer Paletten) oder 1/4-Paletten umfassen.

3. Regallager nach Anspruch 1 oder 2, wobei die Auftragswarenstapel verdichtete Warenstapel mit zwei auf einem Ladungsträger übereinander gestapelten Warenstapeln umfassen.

4. Regallager nach einem der Ansprüche 1 bis 3, wobei die Regalfahrzeuge (60) ausgebildet sind, inden Kommissionierfächern auf einer Auftragspalette (50) versandfertige Auftragswarenstapel zu kommissionieren.

5. Regallager nach Anspruch 4, aufweisend eine Rechnereinrichtung (90) zur Berechnung raumoptimierter Auftragswarenstapel.

6. Regallager nach einem der Ansprüche 1 bis 5, wobei Kommissionierfächer (81) an wechselnden Positionen in den Lagerregalen (80) einrichtbar sind.

7. Regallager nach Anspruch 6, wobei die Ladehilfe (82) einen Palettenboden aufweist, der zum Transport mittels eines Regalfahrzeuges (60) geeignet ist.

8. Regallager nach einem der Ansprüche 1 bis 7, wobei die Regalfahrzeuge (60) mit einzeln verfahrbaren Gabeln (62) zur Kommissionierung von 1/4-Paletten versehen sind.

9. Regallager nach einem der Ansprüche 1 bis 8, aufweisend Pufferplätze (48) in der Nähe des Lagerausgangs zum Puffern versandfertiger Auftragsladungsträger.

10. Regallager nach einem der Ansprüche 1 bis 9, aufweisend eine Folienwickelstation (40) zum Umwickeln versandfertig beladener Auftragsladungsträger mit stabilisierender Folie.

11. Regallager nach Anspruch 10, aufweisend eine Trennstation zum Trennen der versandfertig beladener Auftragsladungsträger von den Ladehilfen (82) gleichzeitig während des Umwickelns der Warenstapel mit stabilisierender Folie.

12. Verfahren zur Lagerung und Kommissionierung von Waren auf Ladungsträgern (52, 54, 56) in einem Regallager (100), **dadurch gekennzeichnet, daß** es die folgenden Schritte aufweist :
- Einlagerung der Waren mittels einem oder mehreren Regalfahrzeugen (60) auf einer Vielzahl von Lagerplätzen in einem Lagerregal (80),
- automatisierte Kommissionierung von Auftragswarenstapeln (55) in dafür vorgesehenen Kommissionierfächern mittels eines der Regalfahrzeuge (60) gemäß einem vorher erfassten Versandauftrag,
- Auslagern der kommissionierten Auftragswarenstapel (55) mittels Regaffahrzeug (60) und
- Ausliefern der versandfertigen Auftragswarenstapel.

13. Verfahren nach Anspruch 12, wobei die Auftragswarenstapel Warenstapel und Mehrfachgebinde auf Ladungsträgern unterschiedlicher Abmessungen, insbesondere Euro-Paletten, 1/2-Paletten und 1/4-Paletten umfassen.

14. Verfahren nach Anspruch 13, wobei für den Kommissioniervorgang eine Ladehilfe (82) eingesetzt wird, die den zu kommissionierenden Auftragswarenstapel von drei Seiten umschließt.

15. Verfahren nach einem der Ansprüche 12 bis 14, ferner umfassend den Schritt der Berechnung eines räumlich optimierten Auftragswarenstapels.

16. Verfahren nach einem der Ansprüche 12 bis 15, ferner umfassend den Schritt des Verdichtens von Auftragswarenstapeln durch Lagerung von zwei oder mehr fertig kommissionierten Auftragsladungsträgern übereinander.

17. Verfahren nach einem der Ansprüche 12 bis 16, ferner umfassend den Schritt der Pufferung versandfertig kommissionierter Auftragswarenstapel (50) im Regallager in der Nähe des Lagerausgangs.

18. Verfahren nach einem der Ansprüche 12 bis 17, ferner umfassend den Schritt der Umwickelung eines versandfertig kommissionierten Auftragswarenstapels mit einer Stabilisierüngsfolie.

19. Verfahren nach Anspruch 18, ferner umfassend den Schritt des Trennens des mit dem Auftragswarenstapel beladenen Auftragsladungsträgers von der Ladehilfe (82) gleichzeitig mit der Umwickelung des Auftragswarenstapels mit einer Stabilisierungsfolie.

## Claims

1. A high-bay storage facility having a plurality of storage racks (80) and storage aisles (70) arranged between them, in which storage and retrieval vehicles (60) for loading and unloading the storage racks (80) may be driven, **characterised in that**, in at least one of the storage racks (80), picking areas (81) with loading aids (82) surrounding each picking area on three sides are provided for picking batches of ordered goods (55) by means of one of the storage and retrieval vehicles (60) according to a previously received dispatch order.

2. A high-bay storage facility according to Claim 1, wherein the batches of ordered goods comprise batches of goods on load carriers (52, 54, 56) of different base dimensions, in particular Euro pallets, half pallets (Düsseldorf pallets) or 1/4 pallets.

3. A high-bay storage facility according to Claim 1 or 2, wherein the batches of ordered goods comprise compacted batches of goods with two batches of goods stacked on top of one another on a load carrier.

4. A high-bay storage facility according to one of Claims 1 to 3, wherein the storage and retrieval vehicles (60) are constructed to pick batches of ordered goods which are ready for dispatch on an order pallet (50) in the picking bays.

5. A high-bay storage facility according to Claim 4, having a computer device (90) for calculating space-optimised batches of ordered goods.

6. A high-bay storage facility according to one of Claims 1 to 5, wherein picking bays (81) may be established at alternating positions in the storage racks (80).

7. A high-bay storage facility according to Claim 6, wherein the loading aid (82) has a pallet base which is suitable for transportation by means of a storage and retrieval vehicle (60).

8. A high-bay storage facility according to one of Claims 1 to 7, wherein the storage and retrieval vehicles (60) are equipped with individually movable forks (62) for picking 1/4 pallets.

9. A high-bay storage facility according to one of Claims 1 to 8, having buffering areas (48) in the vicinity of the storage facility exit for buffering load carriers for orders which are ready for dispatch.

10. A high-bay storage facility according to one of Claims 1 to 9, having a film wrapping station (40) for wrapping stabilising film around load carriers which are loaded with orders ready for dispatch.

11. A high-bay storage facility according to Claim 10, having a separating station for separating the load carriers which are loaded with orders ready for dispatch from the loading aids (82) at the same time as stabilising film is wrapped around the batches of goods.

12. A process for storing and picking goods on load carriers (52, 54, 56) in a high-bay storage facility (100), **characterised in that** it has the following steps;
- storing the goods by means of one or more storage and retrieval vehicles (60) in a plurality of storage areas in a storage rack (80),
- automatically picking batches of ordered goods (55) in picking bays provided for this by means of one of the storage and retrieval vehicles (60) according to a previously received dispatch order,
- removing the picked batches of ordered goods (55) by means of the storage and retrieval vehicle (60), and
- supplying the batches of ordered goods which are ready for dispatch.

13. A process according to Claim 12, wherein the batches of ordered goods comprise batches of goods and multipacks on load carriers of different dimensions, in particular Euro pallets, 1/2 pallets and 1/4 pallets.

14. A process according to Claim 13, wherein a loading aid (82) is used for the picking procedure, which loading aid surrounds the batch of ordered goods to be picked on three sides.

15. A process according to one of Claims 12 to 14, further comprising the step of calculating a spatially optimised batch of ordered goods.

16. A process according to one of Claims 12 to 15, further comprising the step of compacting batches of ordered goods by storing two or more load carriers of fully picked orders on top of one another.

17. A process according to one of Claims 12 to 16, further comprising the step of buffering batches of ordered goods (50) which have been picked ready for dispatch in the high-bay storage facility in the vicinity of the storage facility exit.

18. A process according to one of Claims 12 to 17, further comprising the step of wrapping a stabilising film around a batch of ordered goods which has been picked ready for dispatch.

19. A process according to Claim 18, further comprising the step of separating the load carrier which is loaded with the batch of ordered goods from the loading aid (82) at the same time as a stabilising film is wrapped around the batch of ordered goods.

## Revendications

1. Magasin à rayonnages, comprenant une pluralité de rayonnages (80) et des allées de magasin (70) intermédiaires, dans lesquelles peuvent se déplacer des véhicules de desserte (60) pour charger et décharger les rayonnages (80), **caractérisé en ce qu'**il est prévu, dans au moins un des rayonnages (80), des emplacements (81) de préparation de commandes dotés d'aides au chargement (82) entourant chaque fois l'emplacement de préparation de commandes sur trois côtés, afin de préparer au moyen d'un des véhicules de desserte (60), conformément à une commande d'expédition préalablement enregistrée, des piles (55) de marchandises de commande.

2. Magasin à rayonnages selon la revendication 1, sachant que les piles de marchandises de commande comprennent des piles de marchandises sur des supports de charge (52, 54, 56) de différentes dimensions de surface de base, notamment des europalettes, des demi-palettes (palettes de Düsseldorf) ou des quarts de palettes.

3. Magasin à rayonnages selon la revendication 1 ou 2, sachant que les piles de marchandises de commande comprennent des piles de marchandises tassées avec deux piles de marchandises empilées l'une sur l'autre sur un support de charge.

4. Magasin à rayonnages selon l'une des revendications 1 à 3, sachant que les véhicules de desserte (60) sont conçus pour préparer, dans les casiers de préparation de commande, des piles de marchandises de commande prêtes à l'expédition sur une palette de commande (52).

5. Magasin à rayonnages selon la revendication 4, présentant un équipement de calcul (90) pour calculer des piles de marchandises de commande d'encombrement optimisé.

6. Magasin à rayonnages selon l'une des revendications 1 à 5, sachant que des casiers de préparation de commande (81) peuvent être installés à des positions variables dans les rayonnages (80).

7. Magasin à rayonnages selon la revendication 6, sachant que l'aide au chargement (82) présente un fond de palette qui convient pour le transport au moyen d'un véhicule de desserte (60).

8. Magasin à rayonnages selon l'une des revendications 1 à 7, sachant que les véhicules de desserte (60) sont pourvus de fourches mobiles (62) pour la préparation de quarts de palettes.

9. Magasin à rayonnages selon l'une des revendications 1 à 8, présentant des emplacements (48) de stockage intermédiaire à proximité de la sortie du magasin, pour le stockage intermédiaire de supports de charge de commande prêts à l'expédition.

10. Magasin à rayonnages selon l'une des revendications 1 à 9, présentant un poste (40) d'enroulement de feuille pour enrouler de feuille stabilisatrice les supports de charge de commande chargés prêts à l'expédition.

11. Magasin à rayonnages selon la revendication 10, présentant un poste de séparation pour, en même temps que l'enroulement des piles de marchandises avec la feuille stabilisatrice, séparer des aides au chargement (82) les supports de charge de commande chargés prêts à l'expédition.

12. Procédé d'entreposage de marchandises et de préparation de commandes sur des supports de charge (52, 54, 56) dans un magasin à rayonnages (100), **caractérisé en ce qu'**il comprend les étapes suivantes ;
- emmagasinage des marchandises, au moyen d'un ou plusieurs véhicules de desserte (60), sur une pluralité d'emplacements de stockage dans un rayonnage (80),
- préparation automatisée de piles (55) de marchandises de commande dans des casiers de préparation de commandes prévus à cet effet, au moyen d'un des véhicules de desserte (60) et conformément à une commande d'expédition préalablement enregistrée,
- déstockage, au moyen du véhicule de desserte (60), des piles (55) de marchandises de commande préparées, et
- remise des piles de marchandises de commande prêtes à l'expédition.

13. Procédé selon la revendication 12, sachant que les piles de marchandises de commande comprennent des piles de marchandises et des conditionnements multiples sur des supports de charge de différentes dimensions, notamment des europalettes, des demi-palettes et des quarts de palettes.

14. Procédé selon la revendication 13, sachant qu'on utilise pour le processus de préparation de commandes une aide au chargement (82) qui entoure sur trois côtés la pile de marchandises de commande à préparer.

15. Procédé selon l'une des revendications 12 à 14, comprenant en outre l'étape consistant à calculer une pile de marchandises de commande d'encombrement optimisé.

16. Procédé selon l'une des revendications 12 à 15, comprenant en outre l'étape consistant à tasser des piles de marchandises de commande en stockant les uns sur les autres deux ou plusieurs supports de charge de commande dont la préparation est achevée.

17. Procédé selon l'une des revendications 12 à 16, comprenant en outre l'étape de stockage intermédiaire de piles (55) de marchandises de commande préparées prêtes à l'expédition dans le magasin à rayonnages, à proximité de la sortie du magasin.

18. Procédé selon l'une des revendications 12 à 17, comprenant en outre l'étape consistant à enrouler une feuille stabilisatrice autour d'une pile de marchandises de commande préparée prête à l'expédition.

19. Procédé selon la revendication 18, comprenant en outre l'étape consistant à, en même temps que l'enroulement de la pile de marchandises de commande avec la feuille stabilisatrice, séparer de l'aide au chargement (82) le support de charge de commande chargé de la pile de marchandises de commande.
